# FASCICULE DE BREVET EUROPEEN

(11) **EP 3 941 774 B1**
(45) Date de publication et mention de la délivrance du brevet: **29.03.2023**
(21) Numéro de dépôt: 20710249.2
(22) Date de dépôt: 19.02.2020
(51) Int. Cl.: B60K 37/06

(54) **DISPOSITIF D'INFO-DIVERTISSEMENT POUR UN VÉHICULE**
INFOTAINMENTVORRICHTUNG FÜR EIN FAHRZEUG
INFOTAINMENT DEVICE FOR A VEHICLE

(30) Priorité: 22.03.2019 FR 1903025
(43) Date de publication de la demande: 26.01.2022
(73) Titulaire: PSA Automobiles SA, 78300 Poissy (FR)
(72) Inventeur: FOUQUEREAU, Nicolas, 91640 FONTENAY LES BRIIS (FR); MARTINEZ LOPEZ, Begona, 92400 COURBEVOIE (FR); DRAP, Raphael, 78120 RAMBOUILLET (FR); NICOLAS, Laurent, 92800 PUTEAUX (FR); DIAKITE KABA, Saran, 91570 BIEVRES (FR); CAZIN, Valentin, 75015 PARIS 15 (FR); FILIPPI, Clement, 92100 BOULOGNE BILLANCOURT (FR); LOSEGO, Eric, 78210 SAINT CYR L'ECOLE (FR)
(86) Numéro de dépôt international: PCT/FR2020/050307
(87) Numéro de publication internationale: WO 2020/193888

(56) Documents cités:
- WO-A1-2017/100790
- US-A1- 2017 364 148

## Description

La présente invention concerne de manière générale un dispositif d'info-divertissement monté sur un véhicule automobile.

### Domaine technique de l'invention

Les véhicules automobiles sont généralement dotés d'un dispositif d'info-divertissement permettant de contrôler des fonctions de confort comme le système de climatisation ou le système audio-vidéo. Il permet en outre d'accéder à des informations sur l'état du véhicule ainsi qu'à des informations de navigation.

### État de la technique

Il est connu dans l'art antérieur des dispositifs d'info-divertissement, comme illustré par le document FR3033074B1. En contrepartie, ce système peut présenter notamment l'inconvénient d'imposer un contact visuel prolongé de la part de l'utilisateur, par exemple pour entrer des informations ou naviguer dans les menus. En outre, un tel système d'info-divertissement peut afficher des informations de divertissement non souhaitables lors de la conduite du véhicule du fait de la distraction qu'elles occasionnent. On connaît par le document US2017/364148, un dispositif de commande de véhicule pour commander une pluralité d'écrans fournis dans un véhicule, comprenant : un écran de tableau de bord conçu pour afficher des informations de vitesse du véhicule; un capteur pour suivre le regard d'un conducteur assis dans le siège conducteur du véhicule; et une unité de commande pour commander l'écran de tableau de bord de telle sorte que le contenu affiché sur l'un quelconque des écrans de la pluralité d'écrans est affiché sur l'écran de tableau de bord lorsque le regard est dirigé vers l'un quelconque des écrans de la pluralité d'écrans. On connait aussi par le document WO2017/100790, un ensemble alternatif d'opérations de navigation pouvant comparé avec un ensemble projeté d'opérations de navigation pour identifier au moins une opération de navigation qui est présente dans l'ensemble alternatif d'opérations de navigation et n'est pas présente dans l'ensemble projeté d'opérations de navigation, et/ou au moins une opération de navigation qui est présente dans l'ensemble projeté d'opérations de navigation et n'est pas présente dans l'ensemble alternatif d'opérations de navigation.

### Présentation de l'invention

Un but de la présente invention est de répondre aux inconvénients du document de l'art antérieur mentionnés ci-dessus et en particulier, tout d'abord, de réduire le niveau de distraction d'un conducteur du véhicule lors d'une opération de conduite du véhicule.

Pour cela un premier aspect de l'invention concerne un dispositif d'info-divertissement pour un véhicule, comprenant :
- des moyens de calcul,
- des moyens de détection adaptés pour distinguer une situation de conduite du véhicule d'une situation d'arrêt du véhicule, et connectés aux moyens de calcul,
- des moyens de saisie connectés aux moyens de calcul et permettant de saisir des informations d'un utilisateur selon :
   un premier mode de saisie imposant un contact visuel avec les moyens de saisie d'une durée supérieure à deux secondes,
   un deuxième mode de saisie imposant un contact visuel avec les moyens de saisie d'une durée inférieure ou égale à deux secondes,
   caractérisé en ce que les moyens de calcul sont configurés pour proposer uniquement le deuxième mode de saisie lorsque le véhicule est dans une situation de conduite.

De cette façon, le système d'info-divertissement selon la présente invention permet de limiter la distraction du conducteur et donc d'améliorer la sécurité d'une opération de conduite du véhicule.

Avantageusement, les moyens de calcul sont configurés pour lancer, dans une situation de conduite du véhicule, une étape de vérification permettant de vérifier que l'utilisateur n'est pas conducteur du véhicule et pour proposer alors le premier mode de saisie ainsi que le deuxième mode de saisie.

Par exemple, cette étape de vérification peut être lancée lorsqu'un utilisateur tente d'accéder au premier mode de saisie.

Ainsi, un passager peut utiliser facilement le système d'info-divertissement grâce à tous les modes de saisie possibles, permettant donc de décharger le conducteur des tâches distrayantes liées au système d'info-divertissement. Par exemple, cette étape de vérification peut comprendre un bouton spécifique à actionner et/ou peut impliquer des moyens de détection permettant de s'assurer que le système d'info-divertissement n'est pas manipulé par le conducteur.

À titre d'exemple, les moyens de saisie comprennent un clavier et/ou des boutons utilisables dans le premier mode de saisie ainsi qu'un module de reconnaissance vocale, un module de reconnaissance gestuelle et/ou un module de reconnaissance d'écriture manuscrite utilisables dans le deuxième mode de saisie.

Avantageusement, le présent système d'info-divertissement comprend en outre des moyens d'affichage et les moyens de saisie comprennent une couche de détection tactile intégrée aux moyens d'affichage, par exemple sous la forme d'un écran tactile.

De manière alternative ou en combinaison, les moyens de calcul sont configurés pour afficher sur les moyens d'affichage :
- des premières informations de divertissement non liées au véhicule,
- des secondes informations de confort et/ou de navigation liées au véhicule,
- des troisièmes informations dont l'affichage est requis pour des raisons légales et/ou de sécurité,
et les moyens de calcul sont configurés pour afficher uniquement les deuxièmes et troisièmes informations lorsque le véhicule est dans une situation de conduite.

Ainsi, les informations les plus distrayantes et non utiles à la conduite du véhicule ne sont pas affichées lors d'une situation de conduite, de manière à limiter encore la distraction du conducteur.

De manière alternative ou en combinaison, les moyens de calcul sont configurés pour proposer :
des premières fonctions imposant à un utilisateur une mise en oeuvre d'une durée supérieure à quinze secondes et
des secondes fonctions imposant à l'utilisateur une mise en oeuvre d'une durée égale ou inférieure à quinze secondes,
et les moyens de calcul sont configurés pour proposer uniquement les deuxièmes fonctions lorsque le véhicule est dans une situation de conduite.

Ainsi, le conducteur ne peut lancer ou utiliser des fonctions complexes du système d'info-divertissement susceptible de causer une distraction importante.

Avantageusement, des troisièmes fonctions correspondant aux premières fonctions adaptées de manière à imposer à l'utilisateur une mise en oeuvre d'une durée égale ou inférieure à quinze secondes sont proposées lorsque le véhicule est dans une situation de conduite. Le conducteur peut donc avoir accès à plus de fonctions que seulement les deuxièmes fonctions, tout en limitant la distraction causée par ces fonctions.

Un second aspect de l'invention est un procédé de sécurité pour un véhicule comprenant un système d'info-divertissement selon le premier aspect de l'invention. Ledit procédé comprend au moins les étapes de :
- distinguer, par les moyens de détection, une situation de conduite d'une situation d'arrêt du véhicule,
- proposer un premier mode de saisie imposant à l'utilisateur un contact visuel d'une durée supérieure à deux secondes avec les moyens de saisie et un deuxième mode de saisie imposant à l'utilisateur un contact visuel d'une durée égale ou inférieure à deux secondes avec les moyens de saisie, dans une situation d'arrêt du véhicule,
- proposer uniquement le deuxième mode de saisie dans une situation de conduite du véhicule.

En outre, le présent procédé peut comprendre une étape de vérification ainsi que des étapes liées aux premières et deuxièmes fonctions et/ou aux premières, deuxièmes et troisièmes informations, comme décrit précédemment dans le premier aspect de l'invention.

Un dernier aspect de l'invention est un véhicule automobile comprenant un système d'info-divertissement selon le premier aspect de l'invention et/ou mettant en oeuvre le procédé de sécurité selon le second aspect de l'invention.

### Description des dessins

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[fig. 1] représente un exemple d'interface utilisateur accessible sur un dispositif d'info-divertissement selon la présente invention
[fig. 2] représente un autre exemple d'interface utilisateur accessible sur le dispositif d'info-divertissement selon la présente invention.

### Description détaillée de l'invention

La présente invention est applicable dans tout type de véhicule, qu'il soit personnel, collectif, agricole, militaire ou industriel. La présente invention a pour but général de limiter la distraction du conducteur lors de la conduite du véhicule, lui permettant ainsi de se concentrer sur la circulation et l'opération de conduite.

Un dispositif d'info-divertissement selon la présente invention comprend des moyens de calcul, des moyens de détection, des moyens de saisie ainsi que des moyens d'affichage embarqués dans le véhicule.

Les moyens de calcul comprennent un ou plusieurs microprocesseurs et unités mémoires permettant de mettre en oeuvre un ou plusieurs programmes informatiques.

Les moyens de détection sont reliés aux moyens de calcul par une liaison filaire ou éventuellement sans fil. Ils permettent de distinguer une situation de conduite du véhicule d'une situation d'arrêt du véhicule et comprennent par exemple un capteur de vitesse, un accéléromètre ou bien un capteur de positionnement par satellite.

Une situation d'arrêt du véhicule est par exemple une situation dans laquelle le véhicule est arrêté ou bien une situation dans laquelle le véhicule roule à très faible vitesse, par exemple moins de 5 km/h ou moins de 3 km/h. Selon une législation locale, une situation d'arrêt du véhicule peut être une situation dans laquelle le véhicule est arrêté en dehors d'une voie de circulation, par exemple parqué dans une place de stationnement.

Une situation de conduite du véhicule est une situation dans laquelle le véhicule est en mouvement, par exemple avec une vitesse non nulle, supérieure à 3 km/h ou encore supérieure à 5 km/h. Selon une législation locale, il peut également s'agir d'une situation dans laquelle le véhicule est positionné sur une voie de circulation, y compris à l'arrêt.

Les moyens de saisie peuvent comprendre tout type de moyens de saisie connus de l'homme du métier, par exemple un clavier ou des boutons physiques ou virtuels, un module de reconnaissance vocale, un module de reconnaissance gestuelle ou un module de reconnaissance d'écriture manuscrite.

Les moyens d'affichage peuvent comprendre tout type d'écran ou de système de projection, par exemple sur une planche de bord ou sur un parebrise du véhicule. Par exemple, il peut s'agir d'un écran ayant une couche de détection tactile permettant d'intégrer des moyens de saisie sous la forme d'un clavier ou de boutons virtuels et/ou d'un module de reconnaissance d'écriture manuscrite.

Les moyens de saisie peuvent offrir au moins deux modes de saisie différents : un premier mode de saisie imposant un contact visuel avec les moyens de saisie d'une durée supérieure à deux secondes, par exemple à travers un clavier ou des boutons virtuels qui imposent de regarder l'écran,
un deuxième mode de saisie imposant un contact visuel avec les moyens de saisie égale ou inférieure à deux secondes, par exemple un module de reconnaissance vocale pouvant être déclenché par un bouton virtuel.

Enfin, les moyens de calcul peuvent proposer, par exemple par affichage d'une interface utilisateur sur les moyens d'affichage, deux types de fonctions :
des premières fonctions imposant à un utilisateur une mise en oeuvre d'une durée supérieure à quinze secondes, par exemple, sélectionner un destinataire dans une liste de destinataires, accéder aux réglages du système d'info-divertissement ou effectuer un premier appairage du système d'info-divertissement avec un appareil mobile, et
des secondes fonctions imposant à un utilisateur une mise en oeuvre d'une durée égale ou inférieure à quinze secondes, par exemple sélectionner une navigation vers une destination préenregistrée, sélectionner une radio à écouter ou sélectionner un mode d'affichage spécifique des moyens d'affichage parmi des modes d'affichage préenregistrés.

Enfin, les moyens de calcul peuvent être configurés pour afficher sur les moyens d'affichage :
- des premières informations de divertissement non liées au véhicule, par exemple une vidéo en ligne ou un jeu vidéo et
- des secondes informations de confort et/ou de navigation liées au véhicule, par exemple une navigation par satellite ou des réglages de climatisation ou de chauffage,
- des troisièmes informations dont l'affichage est requis pour des raisons légales et/ou de sécurité, par exemple un message légal de non-responsabilité lié à l'utilisation du système de navigation ou un signal de pression faible des pneumatiques.

Un procédé de sécurité selon la présente invention et pouvant être mis en oeuvre par les moyens de calcul comprend une étape de détection d'une situation de conduite ou bien d'une situation d'arrêt du véhicule. Par exemple, cette étape peut être réalisée par les moyens de calcul sur la base d'une information envoyée par les moyens de détection.

Dans une situation d'arrêt du véhicule, les moyens de calcul donnent accès à tous les modes de saisie permis par les moyens de saisie, toutes les informations affichables et toutes les fonctions disponibles sur le système d'info-divertissement. En d'autres termes, un utilisateur du système d'info-divertissement a accès à l'ensemble du système d'info-divertissement du véhicule.

Cependant, si une situation de conduite est détectée, les moyens de calcul peuvent passer le système d'info-divertissement dans un mode simplifié.

Dans ce mode simplifié, seul le deuxième mode de saisie imposant un contact visuel d'une durée d'au plus deux secondes avec les moyens de saisie est proposé à l'utilisateur. Par exemple, il peut s'agir d'un mode de reconnaissance vocale ou un mode de reconnaissance d'écriture manuscrite activables par une pression sur des boutons dédiés. Le conducteur peut donc activer le mode de saisie et entrer sa saisie sans détourner le regard de la circulation, par exemple en parlant ou bien en traçant des lettres en aveugle sur une surface tactile intégrée ou non aux moyens d'affichage.

La durée de contact visuel imposée par chaque mode de saisie à l'utilisateur peut être mesurée simplement selon des méthodes connues de l'homme du métier, par exemple par oculométrie et/ou selon des protocoles standards en vigueur dans l'industrie, par exemple le protocole NHTSA.

La disponibilité unique du deuxième mode de saisie dans une situation de conduite évite que le conducteur du véhicule ait son attention détournée de la circulation vers le système d'info-divertissement. Ceci limite ou empêche les situations dangereuses dans lesquelles le conducteur n'est pas concentré sur la conduite de son véhicule.

En outre, une étape de vérification peut être prévue, par exemple par un bouton dédié « Passager » pouvant être affiché sur les moyens d'affichage, afin de vérifier que l'utilisateur du système d'info-divertissement n'est pas conducteur du véhicule. Si cette vérification est un succès, c'est-à-dire si l'utilisateur confirme le fait qu'il est passager du véhicule et non conducteur, alors un accès complet aux moyens de saisie est autorisé, par exemple un accès au premier mode de saisie. Par exemple, des moyens de saisie peuvent comprendre des capteurs de siège et cette étape de vérification peut être proposée uniquement quand un passager est assis dans le siège passager avant du véhicule.

Alternativement ou en combinaison, les moyens de vérification peuvent comprendre une caméra pour acquérir une image de l'habitacle du véhicule de façon à déterminer si un passager avant est présent et/ou si le système d'info-divertissement est manipulé par le passager avant et non par le conducteur du véhicule. En outre, les moyens de vérification peuvent comprendre des capteurs de volant permettant de vérifier que le conducteur a bien les mains sur le volant, et donc que le système d'info-divertissement est utilisé par un passager du véhicule.

De plus, les moyens de calcul peuvent ne pas proposer ou bloquer les premières fonctions imposant une mise en oeuvre d'une durée de plus de quinze secondes à un utilisateur. Cette durée de mise en oeuvre peut également être mesurée selon des méthodes et des protocoles connus de l'homme du métier et peut correspondre au temps moyen nécessaire pour réaliser la fonction par une population test de conducteurs.

Ces premières fonctions comprennent typiquement des fonctions longues ou complexes à mettre en oeuvre, par exemple des fonctions de configuration du système d'info-divertissement et seules les deuxièmes fonctions, plus rapides à mettre en oeuvre, peuvent être disponibles dans le cadre d'une situation de conduite du véhicule. Ces deuxièmes fonctions peuvent correspondre à l'utilisation de fonctions basiques par exemple le réglage du système de climatisation.

Ainsi, le conducteur ne peut pas accéder aux fonctions les plus complexes du système d'info-divertissement dans une situation de conduite, ce qui limite sa distraction et donc les situations dangereuses qui y sont liées. Par exemple, une étape de vérification telle que décrite précédemment peut également donner accès aux premières fonctions à un passager du véhicule.

Optionnellement, des troisièmes fonctions simplifiées peuvent être proposées dans une situation de conduite à la place des premières fonctions. Par exemple, il peut s'agir de certains réglages parmi la totalité des réglages possibles, ou bien d'un choix de destinataire d'un appel téléphonique possible uniquement parmi des destinataires favoris et/ou récents. Ces troisièmes fonctions sont donc conçues de manière à permettre un accès limité aux premières fonctions de manière à ce que leurs mises en oeuvre prennent quinze secondes ou moins à l'utilisateur.

De cette manière, le conducteur peut avoir accès à certaines fonctions complexes du système d'info divertissement tout en limitant sa distraction.

Enfin, les moyens de calcul peuvent être configurés de manière à ce que seules les deuxièmes et troisièmes informations soient disponibles dans une situation de conduite. Par exemple, un masque peut être appliqué sur les premières informations dans une situation de conduite.

Une étape de vérification comme décrite précédemment est possible, mais non désirable puisqu'il est difficile de proposer une information à un passager avant sans qu'elle soit accessible au conducteur. En revanche, les moyens d'affichage peuvent comprendre des dispositifs d'affichage non visibles par le conducteur, par exemple dédiés aux passagers arrière, et les premières informations peuvent être proposées uniquement sur ces dispositifs d'affichage.

Ainsi, le conducteur ne peut pas être distrait par des informations de divertissement non liées à la conduite du véhicule, ce qui l'incite à se concentrer sur la conduite du véhicule et les conditions de circulation.

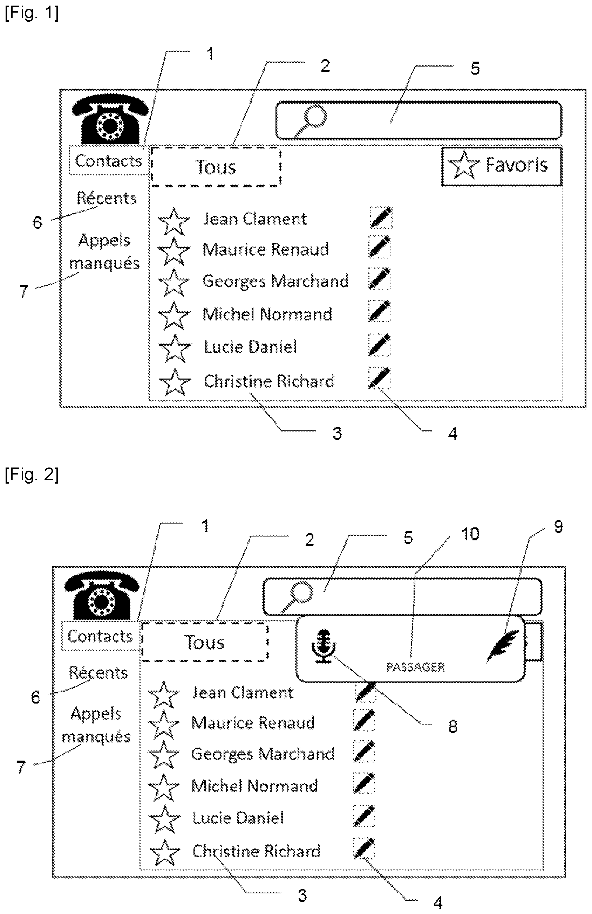

La figure 1 représente une interface d'un système d'info-divertissement généré par les moyens de calculs telle que visible sur les moyens d'affichage et permettant de passer des appels téléphoniques, par exemple par une connexion sans fil avec un téléphone mobile.

Le véhicule étant dans une situation de conduite, le menu « Contacts » 1 ne donne pas accès à tous les contacts et la touche « Tous » 2 est en pointillé ou grisée afin d'indiquer que ces premières fonctions ne sont pas disponibles. En revanche, un accès est possible uniquement aux contacts favoris 3 selon une troisième fonction, limitant ainsi la durée de mise en oeuvre d'un appel téléphonique. L'édition de ces contacts favoris 3, selon une autre première fonction, n'est pas non plus possible dans une situation de conduite, comme représentée par des icônes d'édition 4 en pointillé ou grisée.

Sur la Figure 1, les boutons « Récents » 6 donnant accès aux appels récents et « Appels manqués » 7 donnant accès aux appels non répondus, relèvent des deuxièmes fonctions imposant une durée de mise en oeuvre égale ou inférieure à quinze secondes et sont accessibles à l'utilisateur.

En cas de pression de l'utilisateur sur les boutons pointillés ou grisés correspondant à tous les contacts (bouton 2) ou « édition » (bouton 4), une fenêtre peut mentionner que cette fonction est désactivée pour des raisons de sécurité et/ou peut proposer une étape de vérification permettant à un passager d'accéder à ces premières fonctions indisponibles au conducteur.

En outre, un champ de recherche 5 est disponible. Sur la figure 2, l'utilisateur a appuyé sur le champ de recherche 5 et au lieu du premier mode de saisie comprenant un clavier tactile, des boutons tactiles 8 et 9 correspondent chacun à un deuxième mode de saisie sont affichés, ici une reconnaissance vocale et une reconnaissance d'écriture manuscrite. En outre, un bouton « PASSAGER » 9 permet d'accéder à l'étape de vérification de l'identité de l'utilisateur, et si l'utilisateur confirme ou est vérifié comme passager, alors un clavier tactile selon un premier mode de saisie est rendu disponible.

On comprendra que diverses modifications et/ou améliorations évidentes pour l'homme du métier peuvent être apportées aux différents modes de réalisation de l'invention décrits dans la présente description sans sortir du cadre de l'invention. En particulier, il est fait référence à la durée de contact visuel de l'utilisateur avec les moyens de saisie qui n'est pas limitée à deux secondes, mais peut comprendre toute durée acceptable selon la culture et la législation d'un pays ou d'une zone géographique, par exemple une seconde ou trois secondes.

De plus, la durée de mise en oeuvre des premières et deuxièmes fonctions n'est pas limitée à quinze secondes, mais peut être adaptée selon une législation ou des habitudes locales, par exemple, dix, douze, dix-huit ou vingt secondes.

## Revendications

1. Dispositif d'info-divertissement pour un véhicule, comprenant :
- des moyens de calcul,
- des moyens de détection adaptés pour distinguer une situation de conduite du véhicule d'une situation d'arrêt du véhicule, et connectés aux moyens de calcul,
- des moyens de saisie connectés aux moyens de calcul et permettant de saisir des informations d'un utilisateur selon :
un premier mode de saisie imposant un contact visuel avec les moyens de saisie d'une durée supérieure à deux secondes,
un deuxième mode de saisie (8, 9) imposant un contact visuel avec les moyens de saisie d'une durée égale ou inférieure à deux secondes,
**caractérisé en ce que** les moyens de calcul sont configurés pour proposer uniquement le deuxième mode de saisie (8, 9) lorsque le véhicule est dans une situation de conduite.

2. Dispositif d'info-divertissement selon la revendication précédente, **caractérisé en ce que** les moyens de calcul sont configurés pour lancer, dans une situation de conduite du véhicule, une étape de vérification permettant de vérifier que l'utilisateur n'est pas conducteur du véhicule et pour proposer alors le premier mode de saisie ainsi que le deuxième mode de saisie (8, 9).

3. Dispositif d'info-divertissement selon l'une quelconque des revendications précédentes, **caractérisé en ce que** les moyens de saisie comprennent un clavier et/ou des boutons utilisables dans le premier mode de saisie ainsi qu'un module de reconnaissance vocale, un module de reconnaissance gestuelle et/ou un module de reconnaissance d'écriture manuscrite utilisables dans le deuxième mode de saisie (8, 9).

4. Dispositif d'info-divertissement selon la revendication précédente, **caractérisé en ce qu'**il comprend en outre des moyens d'affichage et **en ce que** les moyens de saisie comprennent une couche de détection tactile intégrée aux moyens d'affichage.

5. Dispositif d'info-divertissement selon la revendication précédente, **caractérisé en ce que** les moyens de calcul sont configurés pour afficher sur les moyens d'affichage :
- des premières informations de divertissement non liées au véhicule et
- des secondes informations de confort et/ou de navigation liées au véhicule
- des troisièmes informations dont l'affichage est requis pour des raisons légales et/ou de sécurité,
et **en ce que** les moyens de calcul sont configurés pour afficher uniquement les deuxièmes et troisièmes informations lorsque le véhicule est dans une situation de conduite.

6. Dispositif d'info-divertissement selon l'une quelconque des revendications précédentes, **caractérisé en ce que** les moyens de calcul sont configurés pour proposer :
des premières fonctions (1, 2, 3, 4) imposant à un utilisateur une mise en oeuvre d'une durée supérieure à quinze secondes et
des secondes fonctions (6, 7) imposant à l'utilisateur une mise en oeuvre d'une durée égale ou inférieure à quinze secondes,
et **en ce que** les moyens de calcul sont configurés pour proposer uniquement les deuxièmes fonctions lorsque le véhicule est dans une situation de conduite.

7. Dispositif d'info-divertissement selon la revendication précédente, **caractérisé en ce que** des troisièmes fonctions correspondant aux premières fonctions adaptées de manière à imposer à l'utilisateur une mise en oeuvre d'une durée égale ou inférieure à quinze secondes sont proposées lorsque le véhicule est dans une situation de conduite.

8. Procédé de sécurité pour véhicule comprenant un système d'info-divertissement selon l'une quelconque des revendications précédentes, ledit procédé de sécurité comprenant les étapes de :
- distinguer, par les moyens de détection, une situation de conduite d'une situation d'arrêt du véhicule,
- proposer un premier mode de saisie imposant un contact visuel avec les moyens de saisie d'une durée supérieure à deux secondes et un deuxième mode de saisie imposant un contact visuel avec les moyens de saisie d'une durée égale ou inférieure à deux secondes dans une situation d'arrêt du véhicule,
- proposer uniquement le deuxième mode de saisie dans une situation de conduite du véhicule.

9. Véhicule automobile comprenant un dispositif d'info-divertissement selon l'une quelconque des revendications 1 à 7.

## Patentansprüche

1. Infotainmentvorrichtung für ein Fahrzeug, umfassend :
- Rechenmittel,
- Erfassungsmittel, die geeignet sind, eine Fahrsituation des Fahrzeugs von einer Stoppsituation des Fahrzeugs zu unterscheiden, und die mit den Berechnungsmitteln verbunden sind,
- Eingabemittel, die mit den Berechnungsmitteln verbunden sind und die Eingabe von Informationen eines Nutzers ermöglichen gemäß :
einem ersten Eingabemodus, der einen Sichtkontakt mit den Eingabemitteln mit einer Dauer von mehr als zwei Sekunden vorschreibt,
einem zweiten Eingabemodus (8, 9), der einen Sichtkontakt mit den Eingabemitteln von einer Dauer von gleich oder weniger als zwei Sekunden erzwingt,
**dadurch gekennzeichnet, dass** die Berechnungsmittel so konfiguriert sind, dass sie nur den zweiten Eingabemodus (8, 9) anbieten, wenn sich das Fahrzeug in einer Fahrsituation befindet.

2. Infotainmentvorrichtung nach dem vorhergehenden Anspruch, **dadurch gekennzeichnet, dass** die Berechnungsmittel so konfiguriert sind, dass sie in einer Fahrsituation des Fahrzeugs einen Prüfschritt einleiten, mit dem überprüft werden kann, dass der Benutzer nicht Fahrer des Fahrzeugs ist, und dann den ersten Eingabemodus sowie den zweiten Eingabemodus (8, 9) anbieten.

3. Infotainmentvorrichtung nach einem der vorhergehenden Ansprüche, **dadurch gekennzeichnet, dass** die Eingabemittel eine Tastatur und/oder Tasten umfassen, die im ersten Eingabemodus verwendet werden können, sowie ein Spracherkennungsmodul, ein Gestenerkennungsmodul und/oder ein Handschrifterkennungsmodul, die im zweiten Eingabemodus verwendet werden können (8, 9).

4. Infotainmentvorrichtung nach dem vorhergehenden Anspruch, **dadurch gekennzeichnet, dass** sie zusätzlich Anzeigemittel umfasst und dass die Eingabemittel eine Berührungserfassungsschicht umfassen, die in die Anzeigemittel integriert ist.

5. Infotainmentvorrichtung nach dem vorhergehenden Anspruch, **dadurch gekennzeichnet, dass** die Rechenmittel so konfiguriert sind, dass sie auf den Anzeigemitteln anzeigen
- erste, nicht fahrzeugbezogene Unterhaltungsinformationen und
- zweite fahrzeugbezogene Komfort- und/oder Navigationsinformationen.
- dritten Informationen, deren Anzeige aus rechtlichen und/oder sicherheitstechnischen Gründen erforderlich ist,
und dass die Rechenmittel so konfiguriert sind, dass sie nur die zweiten und dritten Informationen anzeigen, wenn sich das Fahrzeug in einer Fahrsituation befindet.

6. Infotainmentvorrichtung nach einem der vorhergehenden Ansprüche, **dadurch gekennzeichnet, dass** die Rechenmittel so konfiguriert sind, dass sie :
erste Funktionen (1, 2, 3, 4), die einem Benutzer eine Umsetzung auferlegen, die länger als fünfzehn Sekunden dauert, und
zweite Funktionen (6, 7), die einem Benutzer eine Umsetzung mit einer Dauer von fünfzehn Sekunden oder weniger auferlegen,
und dass die Berechnungsmittel so konfiguriert sind, dass sie nur die zweiten Funktionen anbieten, wenn sich das Fahrzeug in einer Fahrsituation befindet.

7. Infotainmentvorrichtung nach dem vorhergehenden Anspruch, **dadurch gekennzeichnet, dass** dritte Funktionen, die den ersten Funktionen entsprechen, die so angepasst sind, dass sie dem Benutzer eine Implementierung mit einer Dauer von fünfzehn Sekunden oder weniger auferlegen, angeboten werden, wenn sich das Fahrzeug in einer Fahrsituation befindet.

8. Sicherheitsverfahren für ein Fahrzeug mit einem Infotainmentsystem nach einem der vorhergehenden Ansprüche, wobei das Sicherheitsverfahren die folgenden Schritte umfasst: :
- Unterscheiden einer Fahrsituation von einer Situation, in der das Fahrzeug anhält, durch die Erfassungsmittel,
- Vorschlagen eines ersten Erfassungsmodus, der einen Sichtkontakt mit den Erfassungsmitteln von mehr als zwei Sekunden Dauer erzwingt, und eines zweiten Erfassungsmodus, der einen Sichtkontakt mit den Erfassungsmitteln von gleich oder weniger als zwei Sekunden Dauer in einer Situation des Anhaltens des Fahrzeugs erzwingt,
- in einer Fahrsituation des Fahrzeugs nur den zweiten Eingabemodus anbietet.

9. Kraftfahrzeug mit einem Infotainment-Gerät nach einem der Ansprüche 1 bis 7.

## Claims

1. An infotainment device for a vehicle, comprising:
- computing means,
- sensing means adapted to distinguish a vehicle driving situation from a vehicle stopping situation, and connected to the computing means
- input means connected to the calculation means and allowing to input information from a user according to :
a first input mode requiring visual contact with the input means for a duration of more than two seconds,
a second input mode (8, 9) imposing a visual contact with the input means of a duration equal to or less than two seconds,
**characterized in that** the computing means are configured to propose only the second input mode (8, 9) when the vehicle is in a driving situation.

2. An infotainment device according to the preceding claim, **characterized in that** the computing means are configured to initiate, in a driving situation of the vehicle, a verification step for verifying that the user is not a driver of the vehicle and to then propose the first input mode as well as the second input mode (8, 9).

3. Infotainment device according to any of the preceding claims, **characterized in that** the input means comprise a keyboard and/or buttons usable in the first input mode as well as a voice recognition module, a gesture recognition module and/or a handwriting recognition module usable in the second input mode (8, 9).

4. Infotainment device according to the preceding claim, **characterized in that** it further comprises display means and **in that** the input means comprise a tactile detection layer integrated with the display means.

5. An infotainment device according to the preceding claim, **characterized in that** the computing means are configured to display on the display means:
- first non-vehicle related entertainment information and
- second comfort and/or navigation information related to the vehicle
- third information whose display is required for legal and/or safety reasons,
and **in that** the computing means is configured to display only the second and third information when the vehicle is in a driving situation.

6. An infotainment device according to any of the preceding claims, **characterized in that** the computing means are configured to provide:
first functions (1, 2, 3, 4) imposing on a user an implementation of a duration greater than fifteen seconds and
second functions (6, 7) imposing on the user an implementation of a duration equal to or less than fifteen seconds,
and **in that** the calculation means are configured to propose only the second functions when the vehicle is in a driving situation.

7. Infotainment device according to the preceding claim, **characterized in that** third functions corresponding to the first functions adapted so as to impose on the user an implementation of a duration equal to or less than fifteen seconds are proposed when the vehicle is in a driving situation.

8. A safety method for a vehicle comprising an infotainment system according to any of the preceding claims, said safety method comprising the steps of:
- distinguishing, by the sensing means, a driving situation from a vehicle stop situation,
- proposing a first input mode imposing a visual contact with the input means of a duration greater than two seconds and a second input mode imposing a visual contact with the input means of a duration equal to or less than two seconds in a situation of stopping the vehicle
- Providing only the second input mode in a vehicle driving situation.

9. A motor vehicle comprising an infotainment device according to any one of claims 1 to 7.
